# EUROPEAN PATENT APPLICATION

(11) **EP 4 549 598 A1**
(43) Date of publication of application: **07.05.2025**
(21) Application number: 22949415.8
(22) Date of filing: 30.06.2022
(51) Int. Cl.: C21D 9/28, C21D 1/10, C21D 1/62, H05B 6/06, H05B 6/10, H05B 6/14, H05B 6/36

(54) **MOBILE QUENCHING DEVICE**

(71) Applicant: NIPPON STEEL CORPORATION, Chiyoda-ku Tokyo 100-8071 (JP)
(72) Inventor: YAMANE, Akihito, Tokyo 100-8071 (JP); HATA, Toshiyuki, Tokyo 100-8071 (JP); KOZUKA, Chihiro, Tokyo 100-8071 (JP)
(74) Representative: Zimmermann & Partner Patentanwälte mbB
(86) International application number: PCT/JP2022/026265
(87) International publication number: WO 2024/004142

(57) **Abstract**

The present traverse hardening device performs traverse hardening on a shaft-like body in which a large diameter portion having a relatively large outer diameter and a small diameter portion having a relatively small outer diameter are connected via a level difference portion, the device including: a plurality of divided coils which are annularly disposed around a central axis and through which a high-frequency current flows; and a coil drive unit that brings the divided coils close to and away from the central axis, in which each of the divided coils includes a plurality of protruding coil portions each having a shape protruding in a direction away from the central axis in a view along the central axis, and the protruding coil portions are disposed so as to at least partially overlap each other in an extending direction of the central axis and to overlap each other in a radial direction around the central axis in a view along the central axis.

## Description

### Technical Field

The present disclosure relates to a traverse hardening device.

### Background Art

Conventionally, traverse hardening is performed on a shaft-like body by induction heating to increase fatigue strength of the shaft-like body. The term "traverse hardening" as used herein means that hardening is performed while a coil member or the like is moved in an axial direction with respect to a shaft-like body.

Specifically, a shaft-like body is induction-heated by causing a current to flow through a coil while the coil is moved along an outer circumferential surface in a longitudinal direction of the shaft-like body. Then, the shaft-like body is rapidly cooled and hardened by spraying a coolant to the outer circumferential surface immediately after heating. Here, when the shaft-like body is a stepped shaft having a level difference portion in which an outer diameter changes from a large diameter to a small diameter or from a small diameter to a large diameter at an intermediate position in a longitudinal direction thereof, it is necessary to appropriately adjust an air gap between the outer circumferential surface of the shaft-like body and the coil in order to maintain heating efficiency.

As one of device configurations that enable such adjustment, there is a mode in which the coil is constituted by a plurality of divided coils. Specifically, the plurality of divided coils are arranged in a circumferential direction of the shaft-like body, and these divided coils are connected in series to a power source. Then, these divided coils are moved in a longitudinal direction of the shaft-like body while a current from the power source flows through the divided coils. Then, immediately before the divided coils reach a level difference portion, the divided coils are brought close to or away from an outer circumferential surface of the shaft-like body depending on a change in the outer diameter dimension of the shaft-like body, whereby the air gap is maintained substantially constant.

A conventional high-frequency induction heating device using this type of divided coil is disclosed in Patent Document 1 below. The device includes a high-frequency induction heating coil as the divided coil. This shaft-shaped member heating high-frequency induction heating coil adopts a constitution of "a shaft-shaped member heating high-frequency induction heating coil for performing high-frequency induction heating, in a shaft-shaped member having a flange section and a shaft portion erected at a central portion of the flange section, an arc portion formed between the flange section and the shaft portion intersecting with each other and an outer circumferential surface of the shaft portion, the high-frequency induction heating coil including a pair of high-frequency induction heating coil components disposed at positions facing each other across an axis of the shaft-shaped member and disposed facing the arc portion and the shaft portion at a position spaced apart from the arc portion and the shaft portion of the shaft-shaped member, in which a bent coil portion bent so as to protrude in a direction away from the axis of the shaft-shaped member is formed in each of the pair of high-frequency induction heating coil components".

There is description that, according to the device, "by using the pair of high-frequency induction heating coil components, the pair of high-frequency induction heating coil components described above can be disposed correspondingly to all of various shaft-shaped members having different diameters of outer circumferential surfaces".

### Citation List

### Patent Document

Patent Document 1: Japanese Unexamined Patent Application, First Publication No. 2008-150640

### Summary of Invention

### Technical Problem

By the way, in a conventional traverse hardening device including the above device, the number of windings of the divided coil is one, and the number of windings cannot be increased to two or more due to structural reasons. This is because when the number of windings is increased by overlapping a plurality divided coils along a longitudinal direction of a shaft-like body, traverse hardening cannot appropriately be performed on a level difference portion where an outer diameter of the shaft-like body changes. For example, in traverse hardening of a level difference portion from a large diameter portion toward a small diameter portion, the divided coils cannot be brought close to the small diameter portion until the entire divided coils overlapping with each other in the longitudinal direction of the shaft-like body pass the large diameter portion. Therefore, a portion of the divided coils on a front side in a traveling direction, which has reached the small diameter portion after finishing heating of the large diameter portion, performs induction heating while having a wide air gap with an outer circumferential surface of the small diameter portion, which is not preferable from a viewpoint of heating efficiency and irregular hardening pattern.

On the other hand, in traverse hardening of a level difference portion from the small diameter portion toward the large diameter portion, even in the middle of heating the small diameter portion, a portion on a rear side in a traveling direction in the divided coils overlapping with each other in the longitudinal direction of the shaft-like body cannot get over the level difference portion unless the portion on the rear side is moved away early from the outer circumferential surface of the small diameter portion at a point of time before a portion on the front side in the traveling direction reaches the large diameter portion. Therefore, the result is also not preferable from a viewpoint of heating efficiency and irregular hardening pattern.

For the reasons described above, the number of windings of the divided coil up to now cannot be two or more, and one winding is normal. In the case of one winding, it is necessary to set a current flowing through the divided coil to an extremely high current as compared with a case of a plurality of windings, and thus problems such as overheating and short circuit of the divided coil are likely to occur.

The present disclosure has been made in view of the above circumstances, and an object of the present disclosure is to provide a traverse hardening device capable of performing traverse hardening on a stepped shaft while suppressing overheating and short circuit of a divided coil due to a large current.

### Solution to Problem

In order to solve the problem described above, the present disclosure proposes the following aspects.
(1) A traverse hardening device according to an aspect of the present disclosure performs traverse hardening on a shaft-like body in which a large diameter portion having a relatively large outer diameter and a small diameter portion having a relatively small outer diameter are connected via a level difference portion, the device including:
   a plurality of divided coils which are annularly disposed around a central axis and through which a high-frequency current flows; and
   a coil drive unit configured to bring the divided coils close to and away from the central axis, in which
   each of the divided coils includes a plurality of protruding coil portions each having a shape protruding in a direction away from the central axis in a view along the central axis, and
   the protruding coil portions are disposed
   so as to at least partially overlap each other in an extending direction of the central axis and
   to overlap each other in a radial direction around the central axis in a view along the central axis.

According to the traverse hardening device described in the above (1), when the plurality of divided coils are disposed around the shaft-like body and a high-frequency current is supplied to the divided coils, the high-frequency current flows through each of the plurality of protruding coil portions disposed so as to at least partially overlap each other in an extending direction of the central axis and to overlap each other in a radial direction around the central axis in a view along the central axis. As a result, the shaft-like body is heated by electromagnetic induction between the protruding coil portions and the shaft-like body.

When the divided coils are moved along the longitudinal direction of the shaft-like body, in a case where the divided coils get over the level difference portion from the small diameter portion toward the large diameter portion, the coil drive unit brings the divided coils away from an outer circumferential surface of the small diameter portion, whereby all the protruding coil portions can be simultaneously disposed at positions corresponding to an outer circumferential surface of the large diameter portion. Then, traverse hardening is performed on the large diameter portion following the small diameter portion.

On the other hand, in a case where the divided coils get over the level difference portion from the large diameter portion toward the small diameter portion, the coil drive unit brings the divided coils close to the outer circumferential surface of the small diameter portion after the protruding coil portions pass the position of the large diameter portion, whereby all the protruding coil portions can be simultaneously disposed at positions corresponding to the outer circumferential surface of the small diameter portion. Then, traverse hardening is performed on the small diameter portion following the large diameter portion.

In both of the above cases, since the protruding coil portions are disposed so as to at least partially overlap each other in the extending direction of the central axis and to overlap each other in the radial direction around the central axis in a view along the central axis, the positions of all the protruding coil portions in the moving direction in the extending direction of the central axis coincide with each other all the time. Therefore, the whole thickness of the protruding coil portions can be made thinner than that in a case where the protruding coil portions are overlapped in the central axis direction. Therefore, a problem that occurs when the protruding coil portions are overlapped in the central axis direction can be solved. As described above, since traverse hardening can be performed by a two or more-winding divided coil, a current value of a high-frequency current flowing through each of the divided coils can be significantly reduced as compared with that of a one-winding coil.

(2) In the traverse hardening device described in the above (1), the following constitution may be adopted:
each of the divided coils further includes:
a connection portion electrically connecting the protruding coil portions;
a first conductive wire portion electrically connected to one end side around the central axis of the protruding coil portions and extending in the radial direction; and
a second conductive wire portion electrically connected to the other end side around the central axis of the protruding coil portions and extending in the radial direction, and
the first conductive wire portion and the second conductive wire portion are disposed so as to overlap the connection portion in a direction of the central axis.

According to the traverse hardening device described in the above (2), by overlapping the first conductive wire portion and the second conductive wire portion, which are portions that do not contribute to induction heating, in a direction along the central axis with respect to the original connection portion, it is possible to reduce a portion that is not induction-heated in the circumferential direction of the shaft-like body. That is, when the first conductive wire portion and the second conductive wire portion are attempted to be disposed in a gap between the divided coils, it is necessary to increase a non-heating range generated between the divided coils. However, by disposing the first conductive wire portion and the second conductive wire portion at positions other than the gap between the divided coils, an interval of the gap between the divided coils can be narrowed. Therefore, uneven heating in a circumferential direction of the shaft-like body can be suppressed to perform uniform heating.

(3) In the traverse hardening device described in the above (2), the following constitution may be adopted:
each of the divided coils is a two-winding coil having, as the protruding coil portions, an inner peripheral side protruding coil portion relatively close to the central axis and an outer peripheral side protruding coil portion relatively far from the central axis,
the first conductive wire portion includes a first bent portion that is bent in a direction toward the central axis from a position of the outer peripheral side protruding coil portion and is connected to the one end side of the inner peripheral side protruding coil portion, and
the second conductive wire portion includes a second bent portion that is bent from the other end side toward the one end side, and a third bent portion that is bent from the second bent portion toward the other end side of the outer peripheral side protruding coil portion and is connected thereto.

According to the traverse hardening device described in the above (3), the first conductive wire portion can be connected to the inner peripheral side protruding coil portion so as to bypass the outer peripheral side protruding coil portion by the first bent portion. In addition, the second conductive wire portion can be connected to the outer peripheral side protruding coil portion so as to bypass the connection portion by a combination of the second bent portion and the third bent portion. Therefore, the first conductive wire portion and the second conductive wire portion can be overlapped with the connection portion without interfering with other portions.

(4) In the traverse hardening device described in the above (2), the following constitution may be adopted:
each of the divided coils is a three-winding coil having, as the protruding coil portions, a first protruding coil portion, a second protruding coil portion, and a third protruding coil portion, the first protruding coil portion, the second protruding coil portion, and the third protruding coil portion being arranged in order in a direction away from the central axis, and
the first conductive wire portion and the second conductive wire portion overlap the connection portion connecting the first protruding coil portion and the second protruding coil portion and the connection portion connecting the second protruding coil portion and the third protruding coil portion in a direction along the central axis.

According to the traverse hardening device described in the above (4), since the first conductive wire portion and the second conductive wire portion do not enter the gap between the divided coils adjacent to each other, the interval between the divided coils can be narrowed. Therefore, uneven heating in a circumferential direction of the shaft-like body can be suppressed to perform uniform heating. In addition, with the three-winding coil, a current value of a high-frequency current flowing through each of the divided coils can be further reduced.

(5) In the traverse hardening device described in the above (1), the following constitution may be adopted:
each of the divided coils is a three-winding coil having, as the protruding coil portions, a first protruding coil portion, a second protruding coil portion, and a third protruding coil portion, the first protruding coil portion, the second protruding coil portion, and the third protruding coil portion being arranged in order in a direction away from the central axis,
each of the divided coils includes:
   a first connection portion connecting the first protruding coil portion and the second protruding coil portion;
   a second connection portion connecting the second protruding coil portion and the third protruding coil portion;
   a first conductive wire portion electrically connected to the first protruding coil portion and extending in the radial direction; and
   a second conductive wire portion electrically connected to the third protruding coil portion and extending in the radial direction, and
   at least a part of the first conductive wire portion and the second conductive wire portion is shifted from the first connection portion and the second connection portion in a circumferential direction around the central axis.

According to the traverse hardening device described in the above (5), since at least a part of the first conductive wire portion and the second conductive wire portion is shifted in the circumferential direction with respect to the first connection portion and the second connection portion, the disposition interval between the first connection portion and the second connection portion in the direction along the central axis can be narrowed. Therefore, the overall thickness of the divided coils can be reduced. Therefore, when the divided coils pass the level difference portion while the shaft-like body is moved and heated, a problem regarding interference between the divided coils and the level difference portion hardly occurs. In addition, with the three-winding coil, a current value of a high-frequency current flowing through each of the divided coils can be further reduced.

(6) In the traverse hardening device described in any one of the above (1) to (3), the number of the divided coils may be two or three.

According to the traverse hardening device described in the above (6), the number of regions that do not contribute to induction heating and are formed between the divided coils adjacent to each other can be minimized. Therefore, uneven heating in a circumferential direction of the shaft-like body can be suppressed to more reliably perform uniform heating.

### Advantageous Effects of Invention

According to the traverse hardening device of the aspects described above, it is possible to perform traverse hardening on the stepped shaft while suppressing overheating and short circuit of the divided coil due to a large current.

### Brief Description of Drawings

FIG. 1 is a side view schematically illustrating a part of a traverse hardening device according to a first embodiment of the present disclosure in a broken state.
FIG. 2 is a perspective view of one of divided coils included in the traverse hardening device as viewed from below. An opening angle between a first conductive wire portion and a second conductive wire portion is 180°, but in this drawing, the opening angle is illustrated to be narrowed using a break line for the sake of description.
FIG. 3 is a view illustrating a state in which a small diameter portion of a shaft-like body is induction-heated by the divided coil, and is a view taken in a direction of an arrow A-A in FIG. 1.
FIG. 4 is a view illustrating a state in which the divided coil reaches the position of a B-B cross section in FIG. 1 and induction-heats a large diameter portion of the shaft-like body.
FIG. 5 is a flowchart illustrating a traverse hardening method in the present embodiment.
FIG. 6 is a view illustrating a state in which a small diameter portion of a shaft-like body is induction-heated by a traverse hardening device according to a second embodiment of the present disclosure, and is a view taken in a direction of an arrow A-A in FIG. 1.
FIG. 7 is a view of one of divided coils included in a traverse hardening device according to a third embodiment of the present disclosure as viewed from below. FIG. 7(a) is a perspective view illustrating an external appearance of the divided coil, and FIG. 7(b) is a perspective view illustrating flows of a coolant and a current. An opening angle between a first conductive wire portion and a second conductive wire portion is 180°, but in this drawing, the opening angle is illustrated to be narrowed using a break line for the sake of description.
FIG. 8 is a view of one of divided coils of a traverse hardening device according to a fourth embodiment of the present disclosure as viewed from below. FIG. 8(a) is a perspective view illustrating an external appearance of the divided coil, and FIG. 8(b) is a perspective view illustrating flows of a coolant and a current. An opening angle between a first conductive wire portion and a second conductive wire portion is 180°, but in this drawing, the opening angle is illustrated to be narrowed using a break line for the sake of description.
FIG. 9 is a view illustrating a simulation result of a traverse hardening device, and is a longitudinal cross-sectional view of a portion C in FIG. 1. FIG. 9(a) illustrates Conventional Example, and FIG. 9(b) illustrates Example.

### Description of Embodiments

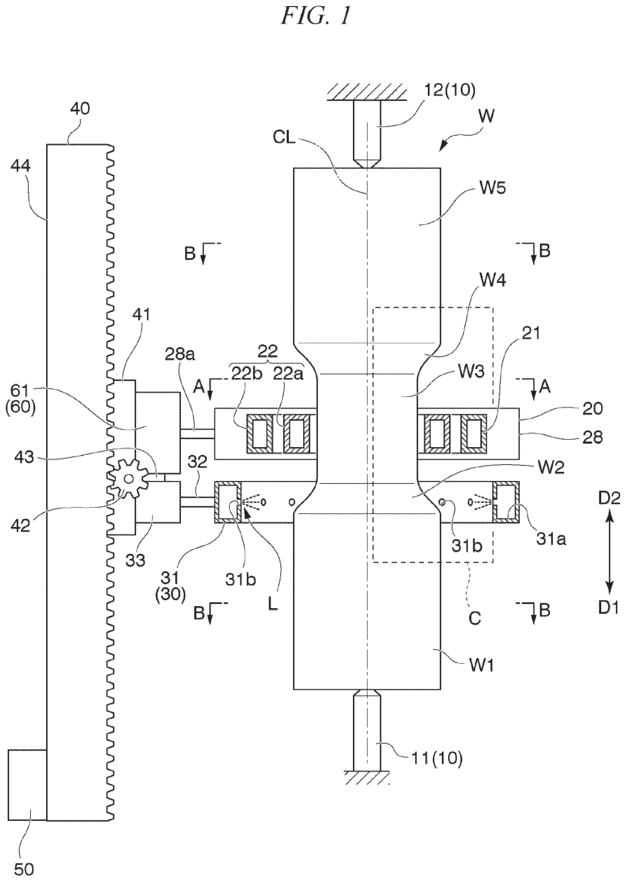

Hereinafter, an embodiment of a traverse hardening device according to the present disclosure will be described with reference to the drawings. In the following description, an upper side of a drawing along a central axis CL illustrated in FIG. 1 may be referred to as an upper side or an upward direction, a lower side of a drawing may be referred to as a lower side or a downward direction, and the vertical direction of a drawing may be collectively referred to as a longitudinal direction. In addition, a radial direction of a shaft-like body W around the central axis CL may be simply referred to as a radial direction, and a circumferential direction of the shaft-like body W may be referred to as a circumferential direction.

### [First Embodiment]

### <Traverse hardening device>

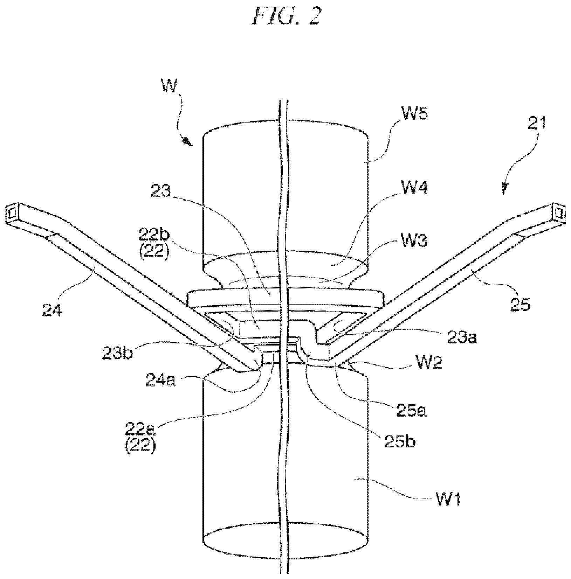

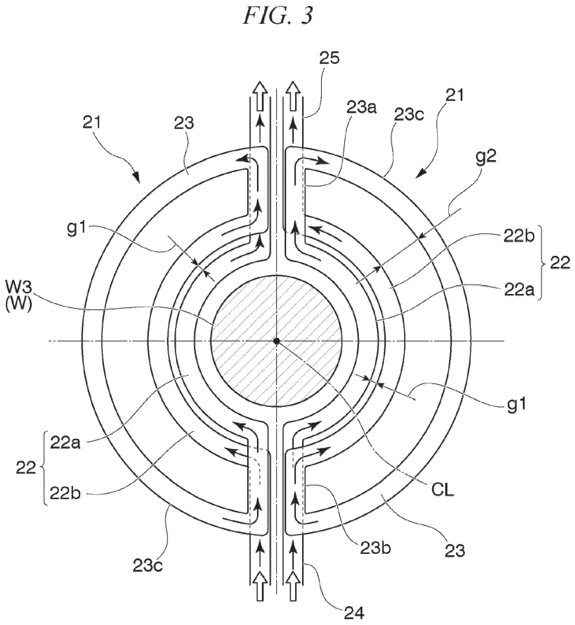

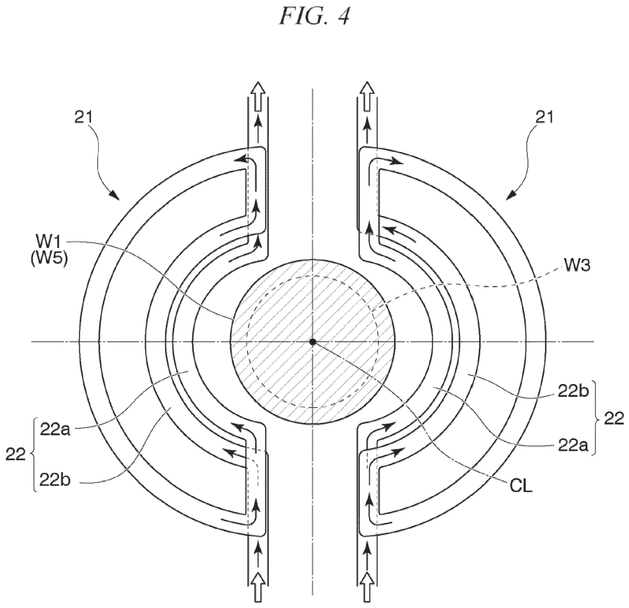

First, a constitution of a traverse hardening device according to the present first embodiment will be described with reference to FIGS. 1 to 4. Here, FIG. 1 is a side view schematically illustrating a part of the traverse hardening device in a broken state. FIG. 2 is a perspective view of one of divided coils included in the traverse hardening device as viewed from below. FIG. 3 is a view illustrating a state in which a small diameter portion of a shaft-like body is induction-heated by the divided coil, and is a view taken in a direction of an arrow A-A in FIG. 1. FIG. 4 is a view illustrating a state in which the divided coil reaches the position of a B-B cross section in FIG. 1 and induction-heats a large diameter portion of the shaft-like body.

A traverse hardening device 1 illustrated in FIG. 1 is a device that performs traverse hardening on a railway vehicle axle or a shaft-like body W such as a ball screw using a high-frequency current.

First, the shaft-like body W will be described. The shaft-like body W is a stepped shaft in which a large diameter portion W1, a level difference portion W2, a small diameter portion W3, a level difference portion W4, and a large diameter portion W5 are coaxially disposed in this order from a lower side to an upper side in a longitudinal direction thereof. The large diameter portions W1 and W5 are cylinders having a circular flat cross section, and have the largest outer diameter in the whole shaft-like body W. The small diameter portion W3 is a cylinder having a circular flat cross section, and has an outer diameter smaller than those of the large diameter portions W1 and W5. The level difference portion W2 has a truncated cone shape connecting an upper end of the large diameter portion W1 and a lower end of the small diameter portion W3. An outer diameter of the level difference portion W2 gradually decreases from the same outer diameter as the large diameter portion W1 in an upward direction, and becomes equal to an outer diameter of the lower end of the small diameter portion W3. The level difference portion W4 has an inverted truncated cone shape connecting an upper end of the small diameter portion W3 and a lower end of the large diameter portion W5. An outer diameter of the level difference portion W4 gradually increases from the same outer diameter as an outer diameter of the upper end of the small diameter portion W3 in the upward direction, and becomes equal to an outer diameter of the lower end of the large diameter portion W5. The large diameter portion W1, the level difference portion W2, the small diameter portion W3, the level difference portion W4, and the large diameter portion W5 share the central axis CL. When the outer diameter dimension of each of the large diameter portions W1 and W5 is 100%, the outer diameter dimension of the small diameter portion W3 is, for example, 80% to 90%.

The shaft-like body W is formed of a material having conductivity, such as carbon steel or low alloy steel containing 95% by weight or more of iron (Fe), which includes ferrite phase.

As illustrated in FIG. 1, the traverse hardening device includes a support portion 10, an induction heating unit 20, a cooling unit 30, a moving unit 40, a control unit 50, and a power source 60.

As illustrated in FIG. 1, the support portion 10 includes a lower center 11 and an upper center 12. The lower center 11 coaxially supports the large diameter portion W1 of the shaft-like body W from below. The upper center 12 coaxially supports the large diameter portion W5 of the shaft-like body W from above. The lower center 11 and the upper center 12 support the shaft-like body W such that the central axis CL of the shaft-like body W extends in the vertical direction, one end side (a side where the large diameter portion W1 is present) of the shaft-like body W is located on a lower side, and the other end (a side where the large diameter portion W5 is present) of the shaft-like body W is located on an upper side. The shaft-like body W is disposed between the lower center 11 and the upper center 12 so as to be rotatable about the central axis CL. The lower center 11 and the upper center 12 pivotally supporting the shaft-like body W in this manner rotate the shaft-like body W about the central axis CL when receiving a driving force from a shaft-like body rotary motor (not illustrated) included in the support portion 10.

As illustrated in FIG. 1, the induction heating unit 20 includes a plurality of divided coils 21 and a coil support base 28.

In the present embodiment, two divided coils 21 are adopted. Since these two divided coils 21 have the same constitution, one of these will be described with reference to FIG. 2, and the other will not be described as having the same constitution.

As illustrated in FIG. 2, the divided coil 21 includes a protruding coil portion 22, a connection portion 23, a first conductive wire portion 24, and a second conductive wire portion 25.

As illustrated in FIGS. 2 and 3, the protruding coil portion 22 is a two-winding coil having an inner peripheral side protruding coil portion 22a located relatively close to the central axis CL and an outer peripheral side protruding coil portion 22b located relatively far from the central axis CL.

Each of the inner peripheral side protruding coil portion 22a and the outer peripheral side protruding coil portion 22b has an arc shape that protrudes in a direction away from the central axis CL when viewed along the central axis CL. Note that an L shape or a V shape may be adopted instead of this arc shape.

As illustrated in FIG. 1, the inner peripheral side protruding coil portion 22a and the outer peripheral side protruding coil portion 22b are disposed at the same position in an extending direction of the central axis CL. That is, the inner peripheral side protruding coil portion 22a and the outer peripheral side protruding coil portion 22b have the same upper surface position and the same lower surface position in the extending direction. Note that relative positions of the inner peripheral side protruding coil portion 22a and the outer peripheral side protruding coil portion 22b in the extending direction may completely coincide with each other as in the present embodiment, or may be slightly shifted from each other. Note that the relative positions preferably completely coincide with each other as illustrated in FIG. 1 from a viewpoint of heating efficiency.

On the other hand, as illustrated in FIG. 3, when viewed from a line of sight along the central axis CL, the inner peripheral side protruding coil portion 22a and the outer peripheral side protruding coil portion 22b are disposed so as to overlap each other with a gap g1 in a radial direction around the central axis CL. That is, the positions of the inner peripheral side protruding coil portion 22a and the outer peripheral side protruding coil portion 22b on one end side in a circumferential direction are the same as each other. Similarly, the positions of the inner peripheral side protruding coil portion 22a and the outer peripheral side protruding coil portion 22b on the other end side in the circumferential direction are also the same as each other. The inner peripheral side protruding coil portion 22a and the outer peripheral side protruding coil portion 22b cover a range of about 180° on an outer circumferential surface of the shaft-like body W, and induction-heat this range.

On the other hand, as illustrated in FIG. 1, in the longitudinal direction along the central axis CL, the positions of the inner peripheral side protruding coil portion 22a and the outer peripheral side protruding coil portion 22b in the vertical direction coincide with each other. That is, an upper surface of the inner peripheral side protruding coil portion 22a and an upper surface of the outer peripheral side protruding coil portion 22b have the same position in the longitudinal direction along the central axis CL. Similarly, a lower surface of the inner peripheral side protruding coil portion 22a and a lower surface of the outer peripheral side protruding coil portion 22b have the same position in the longitudinal direction along the central axis CL.

The connection portion 23 electrically and mechanically connects the inner peripheral side protruding coil portion 22a and the outer peripheral side protruding coil portion 22b. That is, when one end of each of the inner peripheral side protruding coil portion 22a and the outer peripheral side protruding coil portion 22b in the circumferential direction is defined as one end side and the other end is defined as the other end side, the connection portion 23 connects the other end side of the inner peripheral side protruding coil portion 22a and the one end side of the outer peripheral side protruding coil portion 22b.

When the connection portion 23 is more specifically described using the divided coil 21 on the right side of FIG. 3, the connection portion 23 includes straight line portions 23a and 23b and a rewinding portion 23c.

The straight line portion 23a is connected to the inner peripheral side protruding coil portion 22a at a position of an upper end of the drawing, which is the other end side, and is a portion extending straight substantially outward in a radial direction. The straight line portion 23b is connected to the outer peripheral side protruding coil portion 22b at a position of a lower end of the drawing, which is the one end side, and is a portion extending straight substantially outward in the radial direction.

The rewinding portion 23c has a shape protruding in a direction away from the central axis CL when viewed along the central axis CL, and connects end portions of the straight line portions 23a and 23b. The rewinding portion 23c has an arc shape sharing the central axis CL between the inner peripheral side protruding coil portion 22a and the outer peripheral side protruding coil portion 22b. The position of the rewinding portion 23c in a direction along the central axis CL is the same as the positions of the inner peripheral side protruding coil portion 22a and the outer peripheral side protruding coil portion 22b.

The rewinding portion 23c is disposed with an interval g2 with respect to an outer circumferential surface of the outer peripheral side protruding coil portion 22b. The interval g2 is significantly wider than the gap g1. The rewinding portion 23c is a portion that returns a flow of a current in order to make flow directions of a high-frequency current through the inner peripheral side protruding coil portion 22a and the outer peripheral side protruding coil portion 22b the same. That is, induction heating is performed by a high-frequency current flowing through the inner peripheral side protruding coil portion 22a and the outer peripheral side protruding coil portion 22b.

As illustrated in FIGS. 2 and 3, the first conductive wire portion 24 is electrically and mechanically connected to the inner peripheral side protruding coil portion 22a at a position of a lower end of the drawings, which is the one end side, and extends straight substantially outward in a radial direction. The first conductive wire portion 24 is disposed below the straight line portion 23b in an overlapping manner. That is, in plane view along the central axis CL, the first conductive wire portion 24 overlaps directly below the straight line portion 23b. Therefore, in FIG. 3, for example, as compared with a case where the first conductive wire portion 24 is interposed between the straight line portion 23b in one of the pair of divided coils 21 and the straight line portion 23a in the other, a gap between these divided coils 21 can be narrowed.

In the straight line portions 23a and 23b and a gap therebetween, the shaft-like body W cannot be induction-heated. Therefore, by not disposing the first conductive wire portion 24 in the gap as in the present embodiment, it is possible to narrow a non-heating range in the circumferential direction of the shaft-like body W to suppress uneven hardening.

As illustrated in FIG. 2, the first conductive wire portion 24 has a first bent portion 24a that is bent in a direction toward the central axis CL side from the position of the outer peripheral side protruding coil portion 22b and is connected to the one end side of the inner peripheral side protruding coil portion 22a. That is, the first conductive wire portion 24 passes directly below the outer peripheral side protruding coil portion 22b and then is bent perpendicularly upward at the first bent portion 24a to be connected directly below the inner peripheral side protruding coil portion 22a. As described above, according to the first bent portion 24a, the first conductive wire portion 24 can be connected to the inner peripheral side protruding coil portion 22a without interfering with the outer peripheral side protruding coil portion 22b by bypassing the outer peripheral side protruding coil portion 22b.

As illustrated in FIG. 2, the second conductive wire portion 25 includes a second bent portion 25a that is bent from the other end side toward the one end side, and a third bent portion 25b that is bent from the second bent portion 25a toward the other end side of the outer peripheral side protruding coil portion 22b and connected thereto. That is, in the second bent portion 25a, the second conductive wire portion 25 is bent in the horizontal direction from a lower side of the straight line portion 23a toward a lower position of the outer peripheral side protruding coil portion 22b. Subsequently, the second conductive wire portion 25 is bent in the upward direction toward a lower surface of the outer peripheral side protruding coil portion 22b and connected thereto at the third bent portion 25b. As described above, according to the second bent portion 25a and the third bent portion 25b, the second conductive wire portion 25 can be connected to the outer peripheral side protruding coil portion 22b without interfering with the straight line portion 23a by bypassing the straight line portion 23a.

As illustrated in FIG. 3, the second conductive wire portion 25 is electrically and mechanically connected to the outer peripheral side protruding coil portion 22b at a position of an upper end of the drawing, which is the other end side, and extends straight substantially outward in a radial direction. The second conductive wire portion 25 is disposed below the straight line portion 23a in an overlapping manner. That is, in plane view along the central axis CL, the second conductive wire portion 25 overlaps directly below the straight line portion 23a. Therefore, in FIG. 3, as compared with a case where the second conductive wire portion 25 is interposed between the straight line portion 23a in one of the pair of divided coils 21 and the straight line portion 23b in the other, a gap between the divided coils 21 can be narrowed. As a result, for the reasons described above, it is possible to narrow a non-heating range in the circumferential direction of the shaft-like body W to suppress uneven hardening.

Each of the divided coils 21 described above is manufactured by bending, brazing, or the like a hollow pipe having a rectangular cross section, and has conductivity. Each end portion of the first conductive wire portion 24 and the second conductive wire portion 25 is electrically and mechanically connected to a current transformer 61 of the power source 60 illustrated in FIG. 1. The current transformer 61 causes a high-frequency current to flow through each of the divided coils 21.

The divided coils 21 can cool the divided coils 21 by causing a coolant to flow in pipes thereof.

Returning to FIG. **1****,** the coil support base 28 supports the pair of divided coils 21 coaxially with the shaft-like body W. The coil support base 28 includes a guide section (not illustrated) that guides the pair of divided coils 21 such that the pair of divided coils 21 can be brought close to and away from each other, and a coil drive unit (not illustrated) that brings the divided coils 21 close to and away from the central axis CL. For example, a linear guide can be used as the guide section, and a combination of a stepping motor and a ball screw can be used as the coil drive unit. The coil support base 28 is connected to and supported by the moving unit 40 described later via a stay 28a.

As illustrated in FIG. 1, the cooling unit 30 includes a cooling ring 31, a cooling ring support stay 32, and a coolant circulation pump 33.

The cooling ring 31 is formed in an annular shape. An internal space 31a is formed in the cooling ring 31. On an inner circumferential surface of the cooling ring 31, a plurality of nozzles 31b communicating with the internal space 31a are formed spaced apart from each other in the circumferential direction. The shaft-like body W is coaxially inserted into the cooling ring 31. The cooling ring 31 is disposed below the divided coils 21.

The cooling ring 31 is connected to and supported by the coolant circulation pump 33 via the cooling ring support stay 32. The coolant circulation pump 33 supplies a coolant L such as water into the internal space 31a of the cooling ring 31. The coolant L supplied to the internal space 31a is ejected toward the shaft-like body W through the plurality of nozzles 31b to cool the shaft-like body W.

The moving unit 40 illustrated in FIG. 1 includes a support plate 41, a pinion gear 42, a motor 43, and a rack 44.

The coil support base 28, the current transformer 61, the cooling ring 31, and the coolant circulation pump 33 are fixed to the support plate 41. The pinion gear 42 is rotatably fixed to the support plate 41. The motor 43 that rotationally drives the pinion gear 42 is attached to the support plate 41.

The support plate 41 is connected to the rack 44 via a guide rail (not illustrated). The support plate 41 is movable in the vertical direction relative to the rack 44 by the guide rail. The pinion gear 42 meshes with teeth of the rack 44. Therefore, when the control unit 50 drives the motor 43, the pinion gear 42 rotates, and the support plate 41 moves upward or downward with respect to the rack 44.

The control unit 50 includes an arithmetic circuit and a memory (not illustrated). The memory stores a control program and the like for driving the arithmetic circuit.

The control unit 50 is connected to and controls the current transformer 61, the coil drive unit, the motor 43, the coolant circulation pump 33, and the shaft-like body rotary motor.

For example, when traverse hardening is performed on the small diameter portion W3 of the shaft-like body W, the control unit 50 controls the coil drive unit to minimize a disposition interval between the pair of divided coils 21 as illustrated in FIG. 3. On the other hand, when traverse hardening is performed on the large diameter portions W1 and W5 of the shaft-like body W, the control unit 50 controls the coil drive unit to maximize a distance between the pair of divided coils 21 as illustrated in FIG. 4.

In addition, when traverse hardening is performed on the level difference portions W2 and W4 of the shaft-like body W, the control unit 50 controls the coil drive unit to increase and decrease a distance between the pair of divided coils 21 following diameter changes of the level difference portions W2 and W4 in the longitudinal direction along the central axis CL.

### <Traverse hardening method>

Next, a traverse hardening method of the present embodiment will be described.

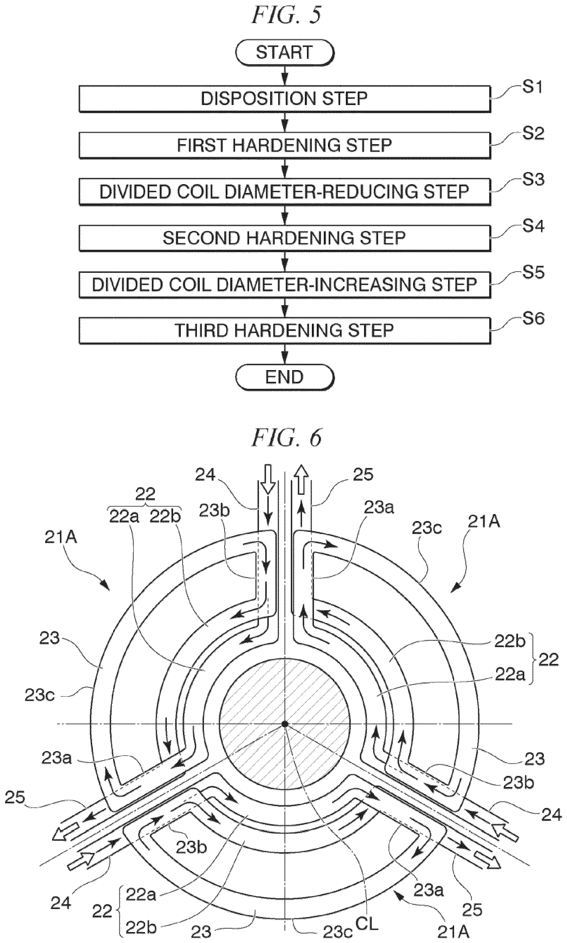

FIG. 5 is a flowchart illustrating the traverse hardening method in the present embodiment.

In advance, the shaft-like body W is supported by the support portion 10 such that the central axis CL extends in the vertical direction.

First, in a disposition step S1, the control unit 50 drives the motor 43 to dispose the pair of divided coils 21 below the large diameter portion W5. Then, the control unit 50 controls the shaft-like body rotary motor to rotate the shaft-like body W about the central axis CL.

Subsequently, the control unit 50 controls the current transformer 61 to cause a high-frequency current to flow through each of the divided coils 21. Furthermore, the control unit 50 drives the coolant circulation pump 33 to eject the coolant L from the plurality of nozzles 31b of the cooling ring 31 toward the shaft-like body W. Furthermore, the control unit 50 controls the coil drive unit to open the interval between the pair of divided coils 21 according to the outer diameter dimension of the large diameter portion W5.

Upon completion of the disposition step S1, the process proceeds to a first hardening step S2.

In the subsequent first hardening step S2, the control unit 50 drives the motor 43 to integrally move the divided coils 21 and the cooling ring 31 in the upward direction. At this time, the large diameter portion W5 is induction-heated from a lower end to an upper end thereof between the divided coils 21. As indicated by a black arrow in FIG. 4, a high-frequency current at this time first flows from the first conductive wire portion 24 through the inner peripheral side protruding coil portion 22a, then flows through the connection portion 23, then flows through the outer peripheral side protruding coil portion 22b, and then flows to the second conductive wire portion 25. A coolant indicated by a white arrow in FIG. 4 cools the divided coils 21 while flowing similarly to the high-frequency current.

On the other hand, in the large diameter portion W5 of the shaft-like body W, an eddy current flows on a surface of the large diameter portion W5 by the high-frequency current flowing through the inner peripheral side protruding coil portion 22a and the outer peripheral side protruding coil portion 22b, and the large diameter portion W5 is induction-heated by the eddy current. Then, when the cooling ring 31 passes the large diameter portion W5 following the divided coils 21, the coolant L is sprayed onto an outer circumferential surface of the large diameter portion W5 after heating. As a result, the large diameter portion W5 after heating is rapidly cooled and hardened.

In a subsequent divided coil diameter-reducing step S3, the level difference portion W2 whose diameter is gradually reduced upward is induction-heated. In the first hardening step, the interval between the divided coils 21 is kept constant, but in the present divided coil diameter-reducing step, the interval between the divided coils 21 is gradually narrowed. That is, when the level difference portion W2 is induction-heated between the divided coils 21 from a lower end to an upper end thereof, the control unit 50 controls the coil drive unit to narrow the interval between the divided coils 21 such that an air gap with the level difference portion W2 is maintained constant.

At this time, in the level difference portion W2 of the shaft-like body W, an eddy current flows on a surface of the level difference portion W2 by the high-frequency current flowing through the inner peripheral side protruding coil portion 22a and the outer peripheral side protruding coil portion 22b, and the level difference portion W2 is induction-heated by the eddy current. Furthermore, when the cooling ring 31 passes the level difference portion W2 following the divided coils 21, the coolant L is sprayed onto an outer circumferential surface of the level difference portion W2 after heating. As a result, the level difference portion W2 after heating is rapidly cooled and hardened.

In a subsequent second hardening step S4, the small diameter portion W3 having the smallest outer diameter dimension and being constant in the longitudinal direction is induction-heated. In the divided coil diameter-reducing step, the interval between the divided coils 21 is gradually narrowed, but in the present second hardening step, the interval between the divided coils 21 is kept constant so as to be minimized.

That is, when the small diameter portion W3 is induction-heated between the divided coils 21 from a lower end to an upper end thereof, the control unit 50 controls the coil drive unit to maintain the interval between the divided coils 21 constant such that an air gap with the small diameter portion W3 is maintained constant. A disposition state of the divided coils 21 at this time is illustrated in FIG. 3.

On the other hand, in the small diameter portion W3 of the shaft-like body W, an eddy current flows on a surface of the small diameter portion W3 by the high-frequency current flowing through the inner peripheral side protruding coil portion 22a and the outer peripheral side protruding coil portion 22b, and the small diameter portion W3 is induction-heated by the eddy current. Then, when the cooling ring 31 passes the small diameter portion W3 following the divided coils 21, the coolant L is sprayed onto an outer circumferential surface of the small diameter portion W3 after heating. As a result, the small diameter portion W3 after heating is rapidly cooled and hardened.

In a subsequent divided coil diameter-increasing step S5, the level difference portion W4 whose diameter is gradually increased upward is induction-heated. In the second hardening step, the interval between the divided coils 21 is kept constant, but in the present divided coil diameter-increasing step, the interval between the divided coils 21 is gradually increased.

That is, when the level difference portion W4 is induction-heated between the divided coils 21 from a lower end to an upper end thereof, the control unit 50 controls the coil drive unit to increase the interval between the divided coils 21 such that an air gap with the level difference portion W4 is maintained constant.

On the hand, in the level difference portion W4 of the shaft-like body W, an eddy current flows on a surface of the level difference portion W4 by the high-frequency current flowing through the inner peripheral side protruding coil portion 22a and the outer peripheral side protruding coil portion 22b, and the level difference portion W4 is induction-heated by the eddy current. Furthermore, when the cooling ring 31 passes the level difference portion W4 following the divided coils 21, the coolant L is sprayed onto an outer circumferential surface of the level difference portion W4 after heating. As a result, the level difference portion W4 after heating is rapidly cooled and hardened.

In a subsequent third hardening step S6, the large diameter portion W5 having the largest outer diameter dimension and being constant in the longitudinal direction is induction-heated. In the divided coil diameter-increasing step, the interval between the divided coils 21 is gradually increased, but in the present third hardening step, the interval between the divided coils 21 is kept constant so as to be maximized.

That is, when the large diameter portion W5 is induction-heated between the divided coils 21 from a lower end to an upper end thereof, the control unit 50 controls the coil drive unit to maintain the interval between the divided coils 21 constant such that an air gap with the large diameter portion W5 is maintained constant. A disposition state of the divided coils 21 at this time is illustrated in FIG. 4.

On the other hand, in the large diameter portion W5 of the shaft-like body W, an eddy current flows on a surface of the large diameter portion W5 by the high-frequency current flowing through the inner peripheral side protruding coil portion 22a and the outer peripheral side protruding coil portion 22b, and the large diameter portion W5 is induction-heated by the eddy current. Furthermore, when the cooling ring 31 passes the large diameter portion W5 following the divided coils 21, the coolant L is sprayed onto an outer circumferential surface of the large diameter portion W5 after heating. As a result, the large diameter portion W5 after heating is rapidly cooled and hardened.

Through the steps described above, the shaft-like body W is hardened over the total length thereof, and all the steps are completed. Note that, in the disposition step S1, the first hardening step S2, the divided coil diameter-reducing step S3, the second hardening step S4, the divided coil diameter-increasing step S5, and the third hardening step S6, traverse hardening is performed while the divided coils 21 and the cooling rings 31 are continuously moved upward with respect to the shaft-like body W without being stopped.

The hardness of the shaft-like body W that has been subjected to traverse hardening over the total length is higher than that before the execution of the traverse hardening.

### [Second Embodiment]

A traverse hardening device according to a second embodiment of the present disclosure will be described below with reference to FIG. 6. FIG. 6 is a view illustrating a state in which a small diameter portion W3 of a shaft-like body W is induction-heated by the traverse hardening device according to the present embodiment, and is a view taken in a direction of an arrow A-A in FIG. 1. Note that, hereinafter, differences from the first embodiment will be mainly described, and other points are the same as those of the first embodiment, and redundant description will be omitted.

As can be seen from comparison with FIG. 3, the shape of each of divided coils 21 in the traverse hardening device of the present embodiment is different from that of the first embodiment. That is, in the first embodiment, one divided coil 21 induction-heats a range of 180° in a circumferential direction of the shaft-like body W. On the other hand, in the present embodiment illustrated in FIG. 6, three divided coils 21A are adopted. The divided coils 21A have the same constitution. Each of the divided coils 21A has a constitution substantially similar to that of the divided coil 21 of the first embodiment, but is different in that one divided coil 21A induction-heats a range of 120° in the circumferential direction of the shaft-like body W. That is, by disposing the three divided coils 21A at equal intervals around the shaft-like body W, the whole circumference 360° of the shaft-like body W is induction-heated.

Similarly to the divided coil 21, each of the divided coils 21A includes a protruding coil portion 22, a connection portion 23, a first conductive wire portion 24, and a second conductive wire portion 25.

As illustrated in FIG. 6, the protruding coil portion 22 of the present embodiment is also a two-winding coil having an inner peripheral side protruding coil portion 22a located relatively close to the central axis CL and an outer peripheral side protruding coil portion 22b located relatively far from the central axis CL.

Each of the inner peripheral side protruding coil portion 22a and the outer peripheral side protruding coil portion 22b has an arc shape that protrudes in a direction away from the central axis CL when viewed along the central axis CL.

Similarly to the first embodiment, the inner peripheral side protruding coil portion 22a and the outer peripheral side protruding coil portion 22b are disposed at the same position in an extending direction of the central axis CL. Note that relative positions of the inner peripheral side protruding coil portion 22a and the outer peripheral side protruding coil portion 22b in the extending direction may be slightly shifted from each other, but preferably completely coincide with each other as in the present embodiment from a viewpoint of heating efficiency.

As illustrated in FIG. 6, when viewed from a line of sight along the central axis CL, the inner peripheral side protruding coil portion 22a and the outer peripheral side protruding coil portion 22b are disposed so as to overlap each other with a gap in a radial direction around the central axis CL.

When the shaft-like body W is induction-heated using the traverse hardening device of the present embodiment, traverse hardening is performed while the three divided coils 21A are brought close to and away from an outer circumferential surface of the shaft-like body W along the radial direction according to the outer diameter dimensions of large diameter portions W1 and W5, a small diameter portion W3, and level difference portions W2 and W4.

Note that, in the present embodiment, the three divided coils 21A are adopted, but it is also conceivable to further increase the number to four or more. However, when the number of divisions of the coil is excessively increased, the number of portions that do not contribute to heating and are generated between the divided coils increases. Therefore, actually, the umber is preferably three or less. When a case where the coil is divided into three and a case where the coil is divided into two are compared, the coil is more preferably divided into two for the same reason.

### [Third Embodiment]

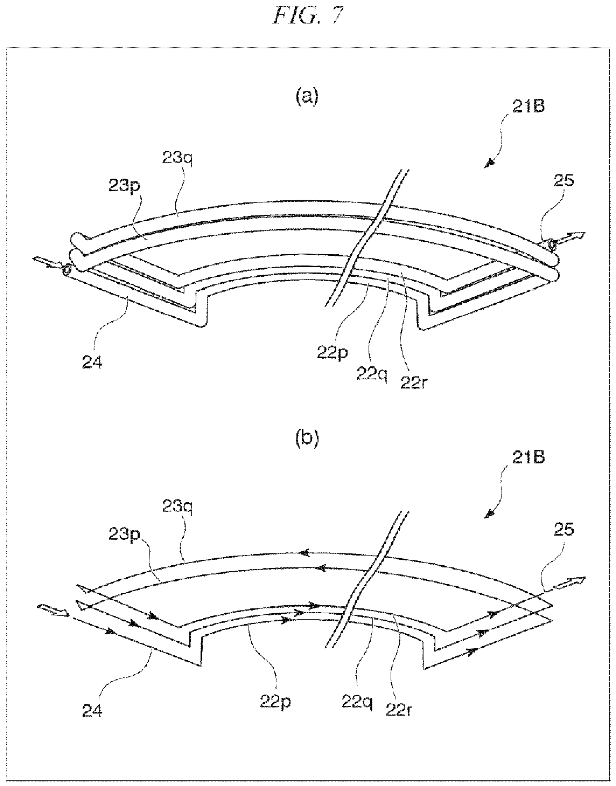

A traverse hardening device according to a third embodiment of the present disclosure will be described below with reference to FIG. 7. FIG. 7 is a view of one of divided coils 21B included in the traverse hardening device according to the present embodiment as viewed from below. FIG. 7(a) is a perspective view illustrating an external appearance of the divided coil 21B, and FIG. 7(b) is a perspective view illustrating flows of a coolant and a current. Note that, hereinafter, differences from the first embodiment will be mainly described, and other points are the same as those of the first embodiment, and redundant description will be omitted.

In the first embodiment, each of the divided coils 21 is a two-winding coil having two coil portions of the inner peripheral side protruding coil portion 22a and the outer peripheral side protruding coil portion 22b, but in the present embodiment, a three-winding coil is adopted as illustrated in FIGS. 7(a) and 7(b).

That is, the divided coil 21B of the present embodiment has three portions of a first protruding coil portion 22p, a second protruding coil portion 22q, and a third protruding coil portion 22r arranged in order in a direction away from the central axis CL. The first protruding coil portion 22p, the second protruding coil portion 22q, and the third protruding coil portion 22r have the same position in a direction along the central axis CL. Note that relative positions of the first protruding coil portion 22p, the second protruding coil portion 22q, and the third protruding coil portion 22r in an extending direction of the central axis CL may be slightly shifted from each other, but preferably completely coincide with each other as in the present embodiment from a viewpoint of heating efficiency.

When viewed from a line of sight along the central axis CL, the first protruding coil portion 22p, the second protruding coil portion 22q, and the third protruding coil portion 22r are disposed so as to overlap each other with a gap in a radial direction around the central axis CL.

The first protruding coil portion 22p and the second protruding coil portion 22q are connected by a connection portion 23p. Similarly, the second protruding coil portion 22q and the third protruding coil portion 22r are connected by a connection portion 23q.

In addition, each of the first conductive wire portion 24 and the second conductive wire portion 25 overlaps with the connection portions 23p and 23q in a direction along the central axis CL (vertical direction in the drawing).

According to the traverse hardening device of the present embodiment, since the first conductive wire portion 24 and the second conductive wire portion 25 do not enter the gap between the divided coils 21B adjacent to each other, the interval between the divided coils 21B can be narrowed. Therefore, uneven heating in a circumferential direction of the shaft-like body W can be suppressed to perform uniform heating. In addition, with the three-winding coil, a current value of a high-frequency current flowing through each of the divided coils 21B can be further reduced.

### [Fourth Embodiment]

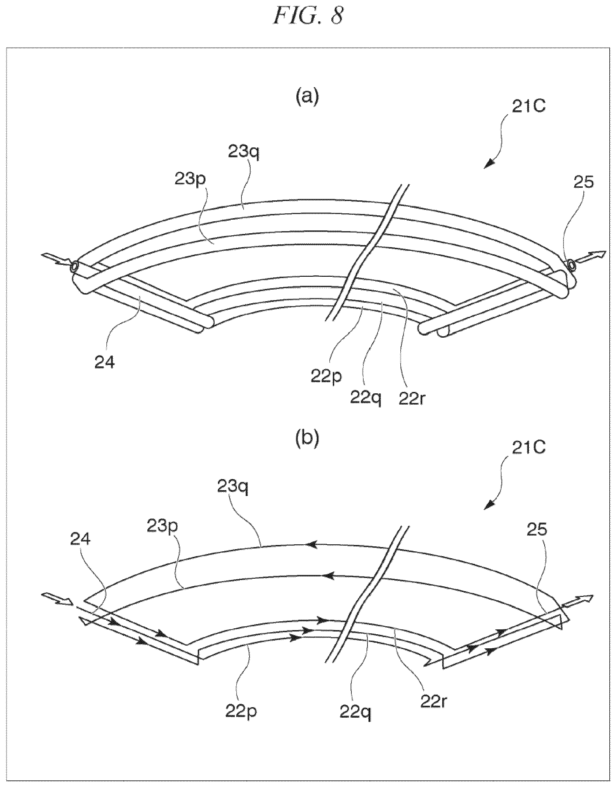

A traverse hardening device according to a fourth embodiment of the present disclosure will be described below with reference to FIG. 8. FIG. 8 is a view of one of divided coils 21C of the traverse hardening device according to the present embodiment as viewed from below. FIG. 8(a) is a perspective view illustrating an external appearance of the divided coil 21C, and FIG. 8(b) is a perspective view illustrating flows of a coolant and a current. Note that, hereinafter, differences from the third embodiment will be mainly described, and other points are the same as those of the third embodiment, and redundant description will be omitted.

The divided coil 21C of the present embodiment is also a three-winding coil similarly to the divided coil 21B of the third embodiment. However, the position of at least a part of a first conductive wire portion 24 and a second conductive wire portion 25 is shifted in a circumferential direction around the central axis CL with respect to the positions of connection portions 23p and 23q.

According to the traverse hardening device of the present embodiment, as compared with the divided coil 21B of the third embodiment, an interval between the connection portions 23p and 23q in a direction along the central axis CL can be narrowed. Therefore, the overall thickness of the divided coils 21C can be reduced. Therefore, when the divided coils 21C pass level difference portions W2 and W4 while the shaft-like body W is moved and heated, a problem regarding interference between the divided coils 21C and the level difference portions W2 and W4 hardly occurs. In addition, similarly to the third embodiment, with the three-winding coil, a current value of a high-frequency current flowing through each of the divided coils 21C can be further reduced.

The gist of the embodiments and modification examples described above is summarized below.
[1] A traverse hardening device according to an aspect of the present disclosure performs traverse hardening on a shaft-like body (W) in which a large diameter portion (W1, W5) having a relatively large outer diameter and a small diameter portion (W3) having a relatively small outer diameter are connected via a level difference portion (W2, W4), the device including:
   a plurality of divided coils (21, 21A, 21B, 21C) which are annularly disposed around a central axis (CL) and through which a high-frequency current flows; and
   a coil drive unit configured to bring each of the divided coils (21, 21A, 21B, 21C) close to and away from the central axis (CL), in which
   each of the divided coils (21, 21A, 21B, 21C) includes a plurality of protruding coil portions (22, 22a, 22b, 22p, 22q, 22r) each having a shape protruding in a direction away from the central axis (CL) in a view along the central axis (CL), and
   the protruding coil portions (22, 22a, 22b, 22p, 22q, 22r) are disposed
   so as to at least partially overlap each other in an extending direction of the central axis (CL) and
   to overlap each other in a radial direction around the central axis (CL) in a view along the central axis (CL).
[2] In the traverse hardening device described in the above [1],
   each of the divided coils (21, 21A, 21B) further includes:
   a connection portion (23) electrically connecting the protruding coil portions (22, 22a, 22b, 22p, 22q, 22r);
   a first conductive wire portion (24) electrically connected to one end side around the central axis (CL) of the protruding coil portions (22, 22a, 22b, 22p, 22q, 22r) and extending in the radial direction; and
   a second conductive wire portion (25) electrically connected to the other end side around the central axis (CL) of the protruding coil portions (22, 22a, 22b, 22p, 22q, 22r) and extending in the radial direction, and
   the first conductive wire portion (24) and the second conductive wire portion (25) are disposed so as to overlap the connection portion (23) in a direction of the central axis (CL).
[3] In the traverse hardening device described in the above [2],
   each of the divided coils (21) is a two-winding coil having, as the protruding coil portions, an inner peripheral side protruding coil portion (22a) relatively close to the central axis and an outer peripheral side protruding coil portion (22b) relatively far from the central axis,
   the first conductive wire portion (24) includes a first bent portion (24a) that is bent in a direction toward the central axis (CL) from a position of the outer peripheral side protruding coil portion (22b) and is connected to the one end side of the inner peripheral side protruding coil portion (22a), and
   the second conductive wire portion (25) includes a second bent portion (25a) that is bent from the other end side toward the one end side, and a third bent portion (25b) that is bent from the second bent portion (25a) toward the other end side of the outer peripheral side protruding coil portion (22b) and is connected thereto.
[4] In the traverse hardening device described in the above [2],
   each of the divided coils (21B) is a three-winding coil having, as the protruding coil portions (22p, 22q, 22r), a first protruding coil portion (22p), a second protruding coil portion (22q), and a third protruding coil portion (22r), the first protruding coil portion (22p), the second protruding coil portion (22q), and the third protruding coil portion (22r) being arranged in order in a direction away from the central axis (CL), and
   the first conductive wire portion (24) and the second conductive wire portion (25) overlap the connection portion (23p) connecting the first protruding coil portion (22p) and the second protruding coil portion (22q) and the connection portion (23q) connecting the second protruding coil portion (22q) and the third protruding coil portion (22r) in a direction along the central axis (CL).
[5] In the traverse hardening device described in the above [1],
   each of the divided coils (21C) is a three-winding coil having, as the protruding coil portions (22p, 22q, 22r), a first protruding coil portion (22p), a second protruding coil portion (22q), and a third protruding coil portion (22r), the first protruding coil portion (22p), the second protruding coil portion (22q), and the third protruding coil portion (22r) being arranged in order in a direction away from the central axis (CL),
   each of the divided coils (21C) includes:
      a first connection portion (23p) connecting the first protruding coil portion (22p) and the second protruding coil portion (22q);
      a second connection portion (23q) connecting the second protruding coil portion (22q) and the third protruding coil portion (22r);
      a first conductive wire portion (24) electrically connected to the first protruding coil portion (22p) and extending in the radial direction; and
      a second conductive wire portion (25) electrically connected to the third protruding coil portion (22r) and extending in the radial direction, and
      at least a part of the first conductive wire portion (24) and the second conductive wire portion (25) is shifted from the first connection portion (23p) and the second connection portion (23q) in a circumferential direction around the central axis (CL).
[6] In the traverse hardening device described in any one of the above [1] to [5],
   the number of the divided coils (21, 21A, 21B, 21C) is two or three.

### [Examples]

Hereinafter, simulation results of Comparative Example in which induction heating was performed by a conventional traverse hardening device using a one-winding divided coil and Example in which induction heating was performed by a traverse hardening device using the divided coil 21 according to the first embodiment will be described.

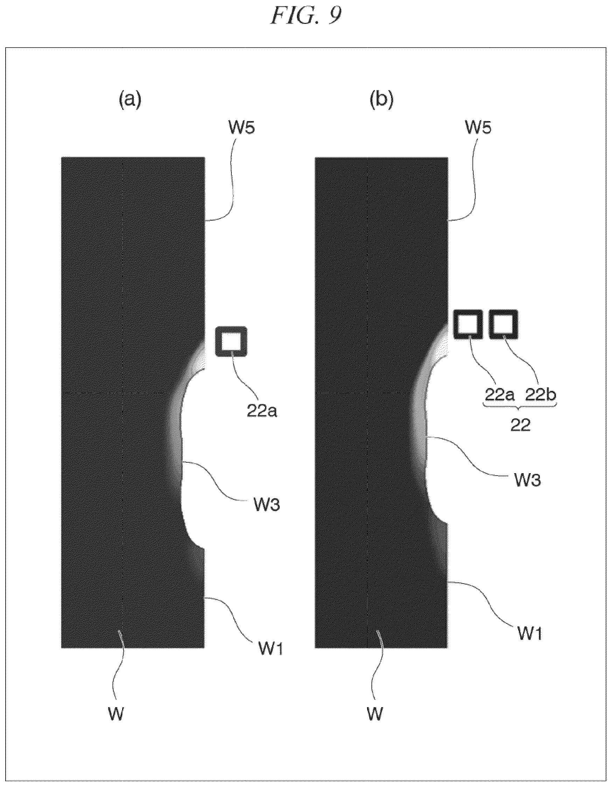

FIG. 9 is a view illustrating the simulation results, and is a longitudinal cross-sectional view of a portion C in FIG. 1. FIG. 9(a) illustrates Conventional Example, and (b) illustrates Example. In this simulation, the outer diameter of the large diameter portion W5 was 200 mm, and the outer diameter of the small diameter portion W3 was 170 mm. A material of the shaft-like body W was carbon steel. A current value required for heating to substantially the same temperature was obtained. As a result, the required current value was 45000 A in Comparative Example using a one-winding coil and 24750 A in Example using a two-winding coil. As described above, it has been confirmed that the current value can be significantly reduced in Example as compared with Comparative Example.

### Industrial Applicability

According to the traverse hardening device of the present disclosure, it is possible to perform traverse hardening on a stepped shaft while suppressing overheating and short circuit of a divided coil due to a large current.

### Reference Signs List

21, 21A, 21B, 21C Divided coil
22 Protruding coil portion
22a Inner peripheral side protruding coil portion
22b Outer peripheral side protruding coil portion
22p First protruding coil portion
22q Second protruding coil portion
22r Third protruding coil portion
23 Connection portion
23p Connection portion (first connection portion)
23q Connection portion (second connection portion)
24 First conductive wire portion
24a First bent portion
25 Second conductive wire portion
25a Second bent portion
25b Third bent portion
CL Central axis
W Shaft-like body
W1, W5 Large diameter portion
W2, W4 Level difference portion
W3 Small diameter portion

## Claims

1. A traverse hardening device that performs traverse hardening on a shaft-like body in which a large diameter portion having a relatively large outer diameter and a small diameter portion having a relatively small outer diameter are connected via a level difference portion, the device comprising:
a plurality of divided coils which are annularly disposed around a central axis and through which a high-frequency current flows; and
a coil drive unit configured to bring the divided coils close to and away from the central axis, wherein
each of the divided coils includes a plurality of protruding coil portions each having a shape protruding in a direction away from the central axis in a view along the central axis, and
the protruding coil portions are disposed
so as to at least partially overlap each other in an extending direction of the central axis and
to overlap each other in a radial direction around the central axis in a view along the central axis.

2. The traverse hardening device according to claim 1, wherein
each of the divided coils further includes:
a connection portion electrically connecting the protruding coil portions;
a first conductive wire portion electrically connected to one end side around the central axis of the protruding coil portions and extending in the radial direction; and
a second conductive wire portion electrically connected to the other end side around the central axis of the protruding coil portions and extending in the radial direction, and
the first conductive wire portion and the second conductive wire portion are disposed so as to overlap the connection portion in a direction of the central axis.

3. The traverse hardening device according to claim 2, wherein
each of the divided coils is a two-winding coil having, as the protruding coil portions, an inner peripheral side protruding coil portion relatively close to the central axis and an outer peripheral side protruding coil portion relatively far from the central axis,
the first conductive wire portion includes a first bent portion that is bent in a direction toward the central axis from a position of the outer peripheral side protruding coil portion and is connected to the one end side of the inner peripheral side protruding coil portion, and
the second conductive wire portion includes a second bent portion that is bent from the other end side toward the one end side, and a third bent portion that is bent from the second bent portion toward the other end side of the outer peripheral side protruding coil portion and is connected thereto.

4. The traverse hardening device according to claim 2, wherein
each of the divided coils is a three-winding coil having, as the protruding coil portions, a first protruding coil portion, a second protruding coil portion, and a third protruding coil portion, the first protruding coil portion, the second protruding coil portion, and the third protruding coil portion being arranged in order in a direction away from the central axis, and
the first conductive wire portion and the second conductive wire portion overlap the connection portion connecting the first protruding coil portion and the second protruding coil portion and the connection portion connecting the second protruding coil portion and the third protruding coil portion in a direction along the central axis.

5. The traverse hardening device according to claim 1, wherein
each of the divided coils is a three-winding coil having, as the protruding coil portions, a first protruding coil portion, a second protruding coil portion, and a third protruding coil portion, the first protruding coil portion, the second protruding coil portion, and the third protruding coil portion being arranged in order in a direction away from the central axis,
each of the divided coils includes:
a first connection portion connecting the first protruding coil portion and the second protruding coil portion;
a second connection portion connecting the second protruding coil portion and the third protruding coil portion;
a first conductive wire portion electrically connected to the first protruding coil portion and extending in the radial direction; and
a second conductive wire portion electrically connected to the third protruding coil portion and extending in the radial direction, and
at least a part of the first conductive wire portion and the second conductive wire portion is shifted from the first connection portion and the second connection portion in a circumferential direction around the central axis.

6. The traverse hardening device according to any one of claims 1 to 5, wherein
the number of the divided coils is two or three.
